# EUROPEAN PATENT APPLICATION

(11) **EP 3 263 264 A1**
(43) Date of publication of application: **03.01.2018**
(21) Application number: 16755684.4
(22) Date of filing: 26.02.2016
(51) Int. Cl.: B23H 3/02, B23H 3/06, B23H 3/10

(54) **ELECTROCHEMICAL MACHINING DEVICE AND ELECTROCHEMICAL MACHINING METHOD**

(30) Priority: 27.02.2015 JP 2015037547
(71) Applicant: The University of Tokyo, Tokyo 113-8654 (JP); Mitsubishi Electric Corporation, Chiyoda-ku Tokyo 100-8310 (JP)
(72) Inventor: KUNIEDA, Masanori, Tokyo 113-8654 (JP); KAWANAKA, Takuma, Tokyo 113-8654 (JP); HASHIMOTO, Takashi, Tokyo 100-8310 (JP); YUZAWA, Takashi, Tokyo 100-8310 (JP)
(74) Representative: Piotrowicz, Pawel Jan Andrzej
(86) International application number: PCT/JP2016/055802
(87) International publication number: WO 2016/136940

(57) **Abstract**

The present invention provides technology that can improve roughness of a machined surface while keeping relative scanning speed of a tool electrode with respect to a workpiece low. A power source 10 applies a voltage, for making current for electrochemical machining flow, between a tool electrode 20 and a workpiece 1. The tool electrode 20 is arranged apart from the workpiece 1, and is capable of being scanned relatively along a surface direction of the workpiece 1. An electrolytic solution supply section 30 supplies electrolytic solution 3 for electrochemical machining between the tool electrode 20 and the workpiece 1. The charge control means 40 eliminates electrical charge that has accumulated between the tool electrode 20 and the workpiece 1 using an appropriate method.

## Description

### TECHNICAL FIELD

The present invention relates to an electrochemical machining device and electrochemical machining method.

### BACKGROUND ART

Electrolyte jet machining (refer to non-patent publication 1 and patent publications 1 and 2 below) is known as one type of electrochemical machining. Electrolyte jet machining is a method for selectively machining only directly below jet flow of an electrolyte, by discharging electrolyte from a nozzle and applying a voltage to a gap between the nozzle and a workpiece. In this case, the nozzle acts as a tool electrode. At the time of electrochemical machining, a voltage is applied between electrodes so that a workpiece becomes an anode, and electric current flows via an electrolytic solution. This machining method has the advantage that since the machining principle is electrolytic action, which is a chemical reaction, it is possible to machine a workpiece regardless of hardness as long as it is a conductive material, and affected layers or residual stress, burrs and cracks etc. do not arise. It is also possible to perform maskless machining of an arbitrary shape by scanning a nozzle.

The present inventors have heretofore disclosed obtaining a mirror surface of small surface roughness under high current density, and obtaining complex porous properties under low current density, by controlling current density, using SUS304 as a workpiece material (non-patent publication 2 below). With the machining method disclosed in these publications, surface roughness of a workpiece is deteriorated due to passage of a low current density region as a result of scanning.

The present inventors have therefore disclosed being able to perform mirror finishing in an arbitrary shape by scanning a nozzle (tool electrode) at high speed and through multiple reciprocations (non-patent publication 3 below).

However, generally, in the case of machining complex shapes, in order to scan an electrode a plurality of times at high speed considerable device cost and running cost become necessary. Also, in the case of carrying out high speed scanning, a problem arises in that the electrolytic solution flies out due to movement of the electrode.

It should be noted that non-patent publication 4 below shows attempts to achieve machining precision through the use of electrochemical machining using ultrashort pulse current that utilizes formation of an electrical double layer on an electrode surface.

### [Prior Art Publications]

### Non-Patent Documents

Non-Patent Document 1
   Kunieda M, Yoshida M, Yoshida H, Akamatsu Y (1993) Influence of Micro Indents Formed by Electro-chemical Jet Machining on Rolling Bearing Fatigue Life. ASME PED 64:693-699.
Non-Patent Document 2
   Kawanaka T, Kunieda M (2014) Selective Surface Texturing Using Electrolyte Jet Machining. Procedia of 2nd CIRP Conference on Surface Integrity (CSI) (13): 345-349.
Non-Patent Document 3

   Natsu W, Ikeda T, Kunieda M (2007) Generating Complicated Surface with Electrolyte Jet Machining. Precision Engineering 31: 33-39.
Non-Patent Document 4
   Schuster R, Kircher V, Allonfue P, Etrl F (2000) Electrochemical Micromachining. Science 289(5476): 98-101.

### Patent publications

Patent Publication 1: Japanese patent laid-open 2006-55933
Patent Publication 2: Japanese patent laid-open 2011-110641

### Summary of the Invention

### Problems to be solved

The present invention has been conceived in view of the above-described situation. A main object of the present invention is to provide technology that can improve roughness of a machined surface while keeping relative scanning speed of a tool electrode with respect to a workpiece low.

### Means of Solving the Problem

Means for solving the above described problems can be as disclosed in any of the following aspects.

### (Aspect 1)

An electrochemical machining device for machining a surface of a workpiece using electrochemical machining, comprising
a power source, a tool electrode, an electrolytic solution supply section, and charge control means, wherein
the power source applies a voltage, for making current for electrochemical machining flow, between the tool electrode and the workpiece,
the tool electrode is arranged apart from the workpiece, and is capable of being scanned relatively along a surface direction of the workpiece,
the electrolytic solution supply section can supply electrolytic solution for electrochemical machining between the tool electrode and the workpiece, and
the charge control means eliminates electrical charge that has accumulated between the tool electrode and the workpiece as a result of voltage application from the power source.

### (Aspect 2)

The electrochemical machining device of aspect 1, wherein the power source uses pulse current as the current, and
the charge control means eliminates the electrical charge based on duty factor of the pulse current.

### (Aspect 3)

The electrochemical machining device of aspect 2, wherein an upper limit of absolute value of pulse width for the pulse current is set short enough to apply mirror finishing to a surface of the workpiece, and current density of the current for electrochemical machining is set high enough for application of the mirror finishing.

### (Aspect 4)

The electrochemical machining device of aspect 1, wherein the power source uses alternating current as the current, and
the alternating current has a forward direction current component that makes the workpiece an anode and a reverse direction current component that makes the workpiece a cathode, and
the charge control means eliminates the electrical charge by applying the reverse direction current component.

### (Aspect 5)

The electrochemical machining device of aspect 4, wherein the charge control means controls the power source so that a value obtained by integrating forward direction current density of the forward direction current component over application time, and a value obtained by integrating reverse current density of the reverse direction current component over application time, become substantially equal.

### (Aspect 6)

The electrochemical machining device of aspect 5, wherein the charge control means sets a peak value for the reverse direction current component lower than a peak value for the forward direction current component.

### (Aspect 7)

The electrochemical machining device of any one of aspects 4-6, wherein the charge control means eliminates the electrical charge by inserting a current idle period between the forward direction current component and the reverse direction current component of the alternating current.

### (Aspect 8)

The electrochemical machining device of any one of aspects 4-7, wherein the tool electrode is made from monocrystalline silicon, titanium alloy, niobium alloy, graphite, or platinum.

### (Aspect 9)

The electrochemical machining device of any one of aspects 1-8, wherein the power source is a constant voltage source or a constant current source.

### (Aspect 10)

The electrochemical machining device of any one of aspects 1-9, wherein at least part of a surface of the workpiece has a curvature that is not 0, and opposing area of the workpiece and the tool electrode is made small enough, within a range of the opposing area, to be able to regard distribution of distance between the tool electrode and the workpiece as substantially constant regardless of the curvature.

### (Aspect 11)

The electrochemical machining device of any one of aspects 1-10, wherein the charge control means changes content of control for eliminating the electrical charge in accordance with relative scanning of the tool electrode.

### (Aspect 12)

An electrochemical machining method that uses the electrochemical machining device of any one of aspects 1-11 comprising
a step of making a current for electrochemical machining flow between the tool electrode and the workpiece using the power source,
a step of scanning the tool electrode relatively along the surface direction of the workpiece,
a step of supplying electrolytic solution between the tool electrode and the workpiece using the electrolytic solution supply section, and
a step of eliminating electrical charge that has accumulated between the tool electrode and the workpiece using the charge control means.

### (Aspect 13)

A surface roughness adjustment method that uses the electrochemical machining device of any one of aspects 1-11 comprising
a step of making a current for electrochemical machining flow between the tool electrode and the workpiece using the power source,
a step of scanning the tool electrode relatively along the surface direction of the workpiece,
a step of supplying electrolytic solution between the tool electrode and the workpiece using the electrolytic solution supply section, and
a step of adjusting surface roughness of the workpiece surface by controlling electrical charge that has accumulated between the tool electrode and the workpiece using the charge control means

### (Aspect 14)

An electrochemical machining device, comprising a tool electrode arranged apart from the workpiece,
an electrolytic solution that is filled between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode workpiece and the workpiece,
peak value of the reverse direction current pulses is made lower than peak value of the forward direction current pulses, and pulse width of the reverse direction current pulses is set wider than pulse width of the forward direction current pulses.

### (Aspect 15)

An electrochemical machining device, comprising a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode workpiece and the workpiece,
peak value of the reverse direction current pulses is made higher than peak value of the forward direction current pulses, and
pulse width of the reverse direction current pulses is set narrower than pulse width of the forward direction current pulses.

### (Aspect 16)

An electrochemical machining device, comprising a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode workpiece and the workpiece,
pulse width of the reverse direction current pulses is set to less than or equal to pulse width of the forward direction current pulses, and
when switching from the reverse direction current pulses to the forward direction current pulses an idle period is provided.

### (Aspect 17)

An electrochemical machining device, comprising a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode workpiece and the workpiece,
with respect to forward direction electrical charge that is supplied between the workpiece and the tool electrode by the forward direction current pulses,
reverse direction electrical charge that is supplied between the workpiece and the tool electrode by the reverse direction current pulses is set so as to become small, and
when switching from the reverse direction current pulses to the forward direction current pulses an idle period is provided.

### (Aspect 18)

An electrochemical machining device, comprising a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode workpiece and the workpiece,
a ratio (A/B) of forward direction electrical charge (A) that is supplied between the workpiece and the tool electrode by the forward direction current pulses, and reverse direction electrical charge (B) that is supplied between the workpiece and the tool electrode by the reverse direction current pulses, is set so as to become larger as speed of the scanning becomes faster.

### (Aspect 19)

An electrochemical machining device, comprising a tool electrode arranged apart from the workpiece,
an electrolytic solution that fills the gap between the workpiece and the tool electrode, and
a power source for supplying forward direction current pulses between the workpiece and the tool electrode, wherein
in the electrochemical machining device that carries out electrochemical machining by relatively scanning the tool electrode workpiece and the workpiece,
a duty factor for applying the forward direction current pulses is set so as to become larger as speed of the scanning becomes faster.

### (Aspect 20)

An electrochemical machining device, comprising a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode workpiece and the workpiece,
pulse width of the reverse direction current pulses is set so as to become smaller, with respect to pulse width of the forward direction current pulses, as speed of the scanning becomes faster.

### Effect of the Invention

According to the present invention, it is possible to improve roughness of a machined surface, while keeping relative scanning speed of a tool electrode, with respect to a workpiece, low.

### BRIEF DESCRIPTION OF THE DRAWINGS

Fig. 1 is an explanatory drawing for explaining the overall structure of an electrochemical machining device of a first embodiment of the present invention.
Fig. 2 is an expanded cross-sectional view of essential parts of Fig. 1.
Fig. 3 is a schematic explanatory drawing for describing the machining principle of electrochemical machining used in the machining device of Fig. 1.
Fig. 4 is an explanatory drawing showing a pulse current waveform used in practical example 1, with the vertical axis being current [A] and the horizontal axis being time [s].
Fig. 5 is a graph showing experimental results of practical example 1, with the vertical axis being surface roughness Rz [µm] and the horizontal axis being translation speed [mm/s].
Fig. 6 is an explanatory drawing showing a pulse current waveform (AC waveform) used in practical example 2, with the vertical axis being current [A] and the horizontal axis being time [s].
Fig. 7 is a graph showing experimental results of practical example 2, with the vertical axis being surface roughness Rz [µm] and the horizontal axis being translation speed [mm/s].
Fig. 8 is an explanatory drawing showing another pulse current waveform (AC waveform) that can be used in practical example 2, with the vertical axis being current [A] and the horizontal axis being time [s].
Fig. 9 is an explanatory drawing for describing the schematic structure of an electrochemical machining device of a second embodiment of the present invention.
Fig. 10 is an explanatory drawing for describing the schematic structure of an electrochemical machining device of a third embodiment of the present invention.

### Best Mode for Carrying out the Invention

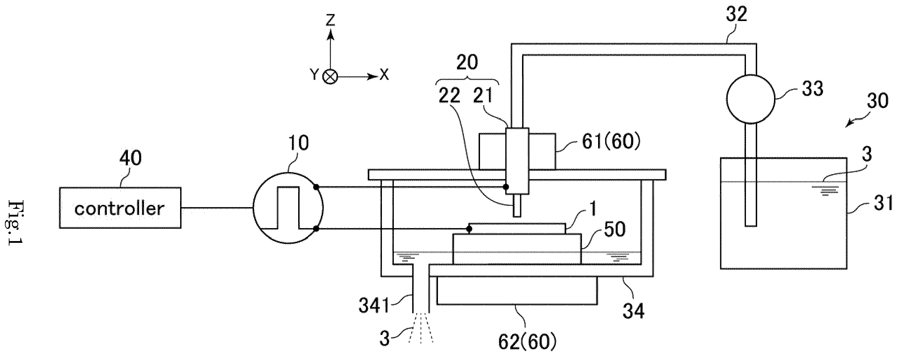

In the following, an electrochemical machining device (hereafter sometimes referred to as "machining device") of a first embodiment of the present invention will be described with reference to the attached drawings . The machining device of this embodiment is for machining a workpiece 1 (refer to Fig. 1) from a surface side thereof using so-called electrolyte jet machining, and in particular is a preferred device in finish machining of a workpiece surface.

### (Structure Of The First Embodiment)

The machining device of this embodiment comprises a power source 10, tool electrode 20, an electrolytic solution supply section 30 and charge control means 40 as basic elements (refer to Fig. 1). This machining device is additionally provided with a workpiece support section 50 and a scanning drive section 60.

### (Power Source)

The power source 10 applies a voltage, for making current for electrochemical machining flow, between the tool electrode 20 and a workpiece 1. In more detail, one electrode of the power source 10 is electrically connected to the tool electrode 20, another electrode of the power source 10 is electrically connected to the workpiece 1, and it is possible to apply a given voltage between the two.

The power source 10 of this embodiment uses a pulse waveform voltage (pulse voltage) as a voltage to be applied, and in this way it is possible to make current having a pulse waveform (refer to practical example 1 and 2 which will be described later) flow between electrodes. It should be noted that with this embodiment, as the power source 10, a constant current source that makes a current value that has been designated by the charge control means 40 flow between electrodes is used, but a constant voltage source may also be used as long as the necessary current value can be obtained. It is also possible to use a so-called high-speed bipolar power source, for example, as the power source 10 of this embodiment.

In the power source 10 of this embodiment, an upper limit of absolute value for pulse width of the pulse current is set small enough that mirror finishing can be applied to a surface of the workpiece 1. Also, a lower limit for current density is set to a value at which machining marks are finished to a mirror surface while the tool electrode is at rest. What level of current density and pulse width should be set to make it possible to accomplish mirror finishing can be determined by experimentation, for example. Here, current density is obtained by dividing electrical current by an opposing area of the tool electrode and the workpiece. Also, the mirror finishing is machining that makes surface roughness small, for example, machining to make surface roughness Rz 0.3µm or less. An upper limit for the absolute value of pulse width is, for example, 150 µs to 100 µs. However, the present invention is not limited to these numerical values.

### (Tool Electrode)

The tool electrode 20 is arranged apart from the workpiece 1, and is capable of being scanned relatively along a surface direction of the workpiece 1. Specifically, the tool electrode 20 of this example is provided with a base portion 21 and a tip portion 22.

The base portion 21 is formed in a hollow cylindrical shape, and connected to piping 32 (described later) of the electrolytic solution supply section 30 which is constructed so as to feed electrolytic solution to the tip portion 22.

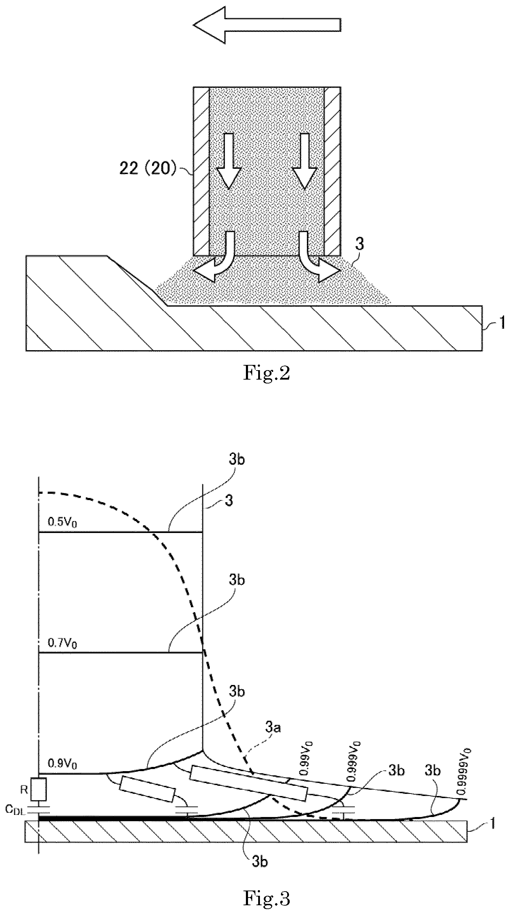

The tip portion 22 extends from a tip side of the base portion 21 in the direction of the workpiece 1 (downward direction in Fig. 1). The tip portion 22 is also formed in a hollow cylindrical shape, so as to be able to discharge a jet of electrolytic solution 3 (described later) to the workpiece 1 (refer to Fig. 2). It should be noted that in Fig. 2 only portions of the tip portion 22 are shown enlarged. Also, the flow state of the electrolytic solution 3 in Fig. 2 is only shown schematically and is not an accurate depiction. The tool electrode 20 of this embodiment has the function of a nozzle for so-called electrolyte jet machining.

As material for the tool electrode 20, various materials can be used as long as it is conductive, and has the necessary mechanical strength. In particular, in a case where monocrystalline silicon, titanium alloy, niobium alloy, graphite or platinum has been used as the material for the tool electrode 20, these materials are suitable since they are difficult to electrolyze even if a reverse direction voltage (voltage that makes the workpiece a cathode) is applied.

Here, in a case where at least part of the surface of the workpiece 1 has a curvature that is not 0, an opposing area of the workpiece 1 and the tool electrode 20 is preferably "sufficiently small that distance between the tool electrode 20 and the workpiece 1 within this opposing area is effectively uniform regardless of the curvature". If this is done it is possible to apply appropriate mirror finishing even to a workpiece having a non-flat surface to be machined, by scanning the machined surface. Making the distance between the workpiece 1 and the tool electrode 20 constant, and sufficiently narrow (for example, making a gap of 1mm or less, more preferably 0.5mm or less) is preferable for the realization of mirror finishing. Accordingly, using a tool electrode 20 that has a small opposing area like this contributes to satisfying these gap conditions.

### (Electrolytic Solution Supply Section)

The electrolytic solution supply section 30 can supply electrolytic solution for electrochemical machining between the tip portion 22 of the tool electrode 20 and the surface to be machined of the workpiece 1 (upper surface in Fig. 1). In more detail, the electrolytic solution supply section 30 of this embodiment is provided with a tank 31, piping 32, a pump 33 and a sink 34.

The tank 31 is a section for accumulating electrolytic solution 3 for electrochemical machining. Here, it is possible to use various fluids that are normally used for electrochemical machining as the electrolytic solution 3.

The piping 32 connects between the tank 31 and the base portion 21 of the tool electrode 20. The pump 33 is attached at some point along the piping 32, and can feed electrolytic solution 3 to the tool electrode 20 in an appropriate flow amount. With this embodiment, in order to obtain an accurate flow amount a so-called gear pump has been used as the pump 33, but this is not restrictive.

The sink 34 is a section that temporarily holds electrolytic solution that has been supplied towards the workpiece 1. A drain section 341 for discharging electrolytic solution 3 that has been supplied is formed in the sink 34. Electrolytic solution 3 that has been discharged from the sink 34 is recovered using an appropriate method that is not illustrated.

### (Charge Control Means)

The charge control means 40 is a functional element for eliminating electrical charge that has accumulated between the tool electrode 20 and the workpiece 1 as a result of voltage application from the power source 10. More specifically, the charge control means 40 of this embodiment is implemented as a controller (for example, a function generator) for adjusting a current waveform (for example, current pulse width, peak value, pulse frequency etc.) attributable to voltage from the power source 10. As an actual device structure, the charge control means 40 may be part of the functions within the power source 10. Basically, the charge control means is not restricted to a mechanical structure as long as it is capable of exhibiting the necessary functions, and can also be implemented, for example, using a combination of a computer and computer programs, and does not need to exist as a single element.

The charge control means 40 of this embodiment is configured to eliminate electrical charge that has accumulated between the electrodes based on a duty factor of pulse current. Detailed operation of the charge control means 40 (specifically a current waveform) will be described later using practical example 1 and 2.

### (Workpiece Support Section)

The workpiece support section 50 is for supporting the workpiece 1 which constitutes the object of electrochemical machining, and with this embodiment is constructed using a machining table.

### (Scanning Drive Section)

The scanning drive section 60 comprises an XZ direction drive section 61 and a Y direction drive section 62 with this embodiment. The XZ direction drive section 61 can move the tool electrode 20 at a given speed in an X direction (left to right direction in Fig. 1), and in a Z direction (up and down direction in Fig. 1). The Y direction drive section 62 can move the workpiece support section 50 at a given speed in a Y direction (a direction perpendicular to the sheet of Fig. 1), via the sink 34. Control of operations such as scanning speed and scanning direction of the scanning drive section 60 can be implemented by a controller, not illustrated. Using the scanning drive section 60, with this embodiment it is possible to scan the tool electrode 20 relative to the workpiece 1 in an arbitrary direction within an XY plane.

### (Operation Of The Machining Device Of The First Embodiment)

Operation of the machining device of the previously described first embodiment will be described in the following.

### (Description Of Machining Principle)

As a prerequisite for operation description, the machining principle of the electrochemical machining of this embodiment will be described with further reference to Fig. 3.

Fig. 3 shows potential distribution within a jet flow and current density distribution on the workpiece surface, for the electrolytic solution 3 that has been jetted out from a cylindrical nozzle acting as a tool electrode. With electrochemical machining current density at opposing portions of the tool electrode and the workpiece is high, and current density is lowered moving away from that area. Reference numeral 3a in Fig. 3 schematically represents current density distribution of the electrolytic solution 3 that exists between the workpiece 1 and the tool electrode 20 (omitted from within Fig. 3). Also, reference numerals 3b in Fig. 3 schematically represent equipotential surfaces, and here reference numeral V₀ is power source voltage applied between the electrodes (in a case where the workpiece side constitutes an anode).

With machining that scans a tool electrode (scanning machining), when directly beneath a nozzle of high current density passes a point on the workpiece, if that current density is sufficiently high that a mirror surface can be obtained when the nozzle is at rest, the workpiece surface directly beneath the nozzle is machined to a mirror surface. However, after that a peripheral section thereof with low current density passes through that machining portion. In a case where scanning speed is slow, the workpiece surface is roughened by electrochemical machining due to the peripheral section with low current density, and surface roughness becomes large (that is, from the perspective aimed at mirror finishing, the mirror surface is degraded).

However, a machining amount per unit time in the case of low current density is significantly inferior compared to the case of high current density. If scanning speed is raised, sojourn time of the electrolytic solution jet for a single scan (namely the duration for which electrochemical machining using the opposed electrode is carried out) becomes short, and the effect of the low current region becomes small. As a result, it can be considered that surface roughness improves with increase in scanning speed, as disclosed in previously described nonpatent publication 3.

On the other hand, in recent years, for the purpose of improving machining precision, electrochemical machining has been carried out using ultrashort pulse current that utilizes formation of an electrical double layer on an electrode surface (previously described non-patent publication 4). If a voltage is applied between the workpiece 1 and the tool electrode 20, an electrical double layer having a form that confronts positive and negative electrical charge is formed on the workpiece surface, as shown in Fig. 3. The phenomenon forming this electrical double layer can be realized by charging of electrical charge into a capacitor C_{DL} and because of differences in current density a difference in charge time of the electrical double layer arises. It should be noted that reference numeral R in the drawing represents a resistive component within the electrolytic solution jet.

According to the findings of the present inventors, an electrolytic reaction does not occur if an electrical double layer is not sufficiently formed. Before an electrical double layer is formed at a low current density portion, elution of the workpiece is confined to a high current density portion directly below the tool electrode by turning off pulse current (namely, turning off machining voltage). Electrical charge of the electrical double layer is then discharged in an idle period after a pulse has been turned off, and the next pulse is applied. At this time if the idle time is not sufficient electrical charge of the electrical double layer will not be completely discharged, and an electrolytic reaction will occur even in a low current density region. Accordingly, by making machining current short pulses and providing a sufficient idle time it is possible to confine elution of the workpiece to only a high current density region, and even in cases of scanning at low speed it should be possible to obtain a machining surface having a good surface roughness. To give further information, if current density so as not to be able to obtain a mirror surface at the time the tool electrode is at rest is provisionally known, it is preferable to set a time for which a workpiece is exposed to that type of low current density region to short pulse width machining current when an electrode has been scanned, so as to be shorter than a time in which machining at that low current density will occur.

The above is the machining principle that is the prerequisite for this embodiment, based on the findings of the present inventors.

### (Electrochemical Machining Operation)

In the case of carrying out electrochemical machining using the machining device of this embodiment, first of all the workpiece 1 is arranged on an upper surface of the workpiece support section 50 (refer to Fig. 1). Then electrolytic solution 3 is supplied between the tool electrode 20 and the workpiece 1 by the electrolytic solution supply section 30. At this time, the electrolytic solution 3 passes through the tip portion 22 of the tool electrode 20 and is supplied to machining locations (refer to Fig. 2). On the other hand a voltage is applied at a given waveform between the tool electrode 20 and the workpiece 1, by the power source 10. In this way it is possible to make current for specified electrochemical machining flow between the two. Here, a waveform of electrical current that flows between the tool electrode 20 and the workpiece 1 is set by the charge control means 40 (refer to practical example 1 and 2 that will be described later).

Further, with this embodiment the tool electrode 20 is scanned relatively within an XY plane with respect to the workpiece 1 using the scanning drive section 60. In this way the surface of the workpiece 1 is machined in the scanning direction, and it is possible to improve the surface roughness. It should be noted that with this embodiment a Z direction position of the tool electrode 20 is fixed during machining, and is adjusted as required.

In the following, the electrochemical machining operation of this example will be described in more detail with reference to a specific practical example.

### (Practical Example 1)

Based on the previously described machining principle, electrochemical machining is carried out for conditions (Pulse) in table 1 below, using the device structure of the first embodiment.

**Table 1**

| Table 1 Machining conditions | Pulse | AC |
|---|---|---|
| Pulse on time [µs] | 100 | 100 |
| Duty factor [%] | 1, 10 | 59, 67, 77 |
| Machining current [A] | ± 3.0 | |
| Current density [A/cm2] | 187 | |
| Gap width [mm] | 0.5 | |
| Flow rate [ml/s] | 5.2 | |
| Nozzle inner diameter [mm] | 1.43 | |
| Electrolyte | NaNO₃aq 20wt% | |

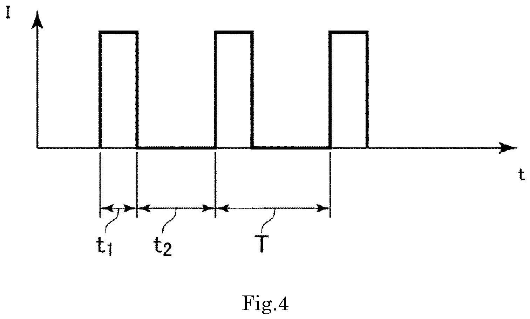

The meaning of items shown in this table is as shown below. It should be noted that for reference one example of a current waveform based on pulse voltage applied from the power source is shown in Fig. 4. Also, in table 1, conditions (AC) for a case where an alternating waveform is applied are also depicted, but the alternating case will be described later.

Pulse on time [µs] : Machining current application time (t₁ in Fig. 4) ;
Duty factor [%]: Duty factor (t₁/T in Fig. 4);
Machining current [A]: current flowing between electrodes;
Current density [A/cm²]: current density between electrodes;
Gap width [mm]: distance between the tool electrode and the workpiece;
Flow rate [ml/s]: flow rate of electrolytic solution;
Nozzle inner diameter [mm]: inner diameter of nozzle of tip portion of tool electrode;
Electrolyte : electrolytic solution.

Current density between the electrodes is not uniform, but in the previous description a value obtained by dividing machining current value by internal area of the nozzle vent was made current density, for the sake of simplicity. As will be understood, the descriptions in table 1 are merely one example, and other appropriate structures are possible.

With practical example 1, pulse current is used. Pulse width t₁ is made a constant value such a 100µs, and grooving is carried out on the workpiece 1 by scanning the tool electrode 20 while varying pulse idle time t₂ and scanning speed. Reference numeral T in Fig. 4 shows pulse period at this time. The workpiece 1 is made an anode and the direction of current flowing from the workpiece 1 to the tool electrode 20 is made the vertical axis direction in Fig. 4. Also, for the purpose of comparison, the same machining was also carried out with direct current (DC), namely under conditions of t₂=0, duty factor=100%. In this way the effect of pulse current duty factor and scanning speed on the surface roughness was looked into. SUS304 was used as the workpiece 1. With regard to surface roughness of the workpiece 1, maximum height roughness Rz was measured and averaged at four different locations within a machined surface.

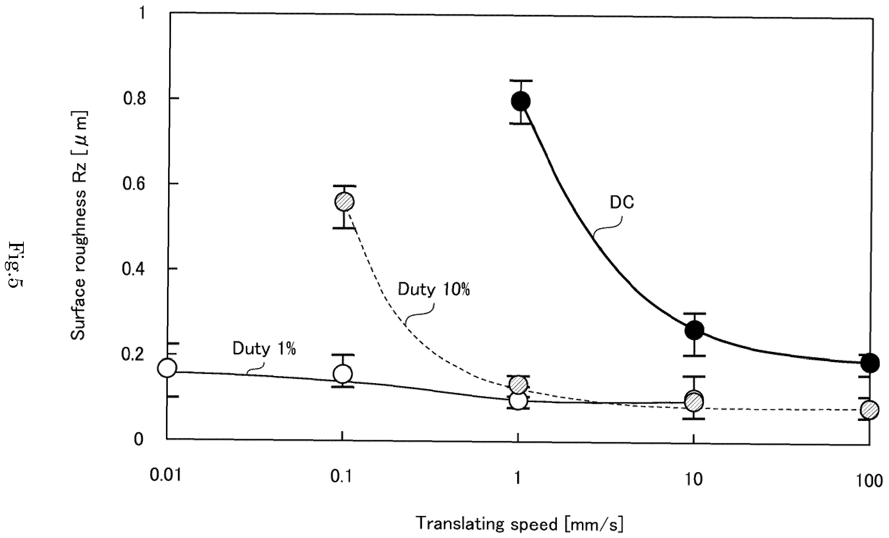

Measurement results for surface roughness when the scanning speed was varied are shown in Fig. 5. The curved lines indicated as "Duty" in Fig. 5 show the result data at a given duty factor (%) . As shown in Fig. 5, in a case where pulse current is used, and in a case where DC is used, it will be understood that surface roughness is lowered by raising scanning speed. On the other hand, when scanning speed is slow, with a pulse width of 100µs, surface roughness improves with increase in length of idle period (that is, lowering of duty factor). In this way, in a case where sufficient voltage idle time has been set for a constant value such as pulse width 100µs (that is, duty factor 1%), it will be understood that even in the case of low speed scanning, a mirror surface of good surface roughness can be obtained. It can be assumed that this is because, as was discussed above, in electrolyte jet machining (namely electrochemical machining where an electrode is scanned in an arbitrary direction) also, a machining region is confined to only a high current density region.

Accordingly, according to practical example 1 it is possible to eliminate electrical charge between electrodes using the charge control means 40, and in this way it will be understood that it is possible to improve surface roughness of the machined surface while keeping scanning speed low. It is also possible to control surface roughness of the machined surface by adjusting duty factor using the charge control means 40.

### (Practical Example 2)

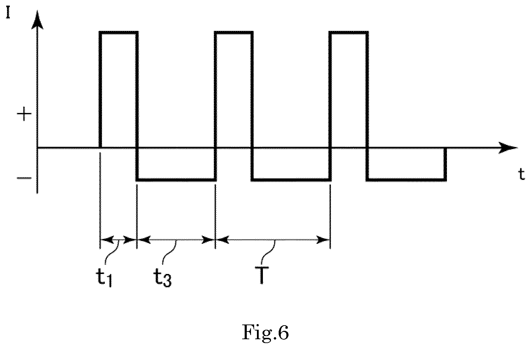

After changing the voltage waveform to be applied (namely current waveform flowing between electrodes) to that shown in Fig. 6, electrochemical machining is carried out under the same conditions as for practical example 1. AC in table 1 shows pulse waveform (alternating current waveform) used in practical example 2. Practical example 2 is configured so that in period t₃ (refer to Fig. 6) a reverse direction voltage is applied, and reverse direction current flows. In this way, alternating current flowing between electrodes has a forward direction current component (time t₁) that flows, with the workpiece 1 as an anode, from the workpiece 1 to the tool electrode 20, and a reverse direction current component (time t₃) that flows, with the workpiece as a cathode, from the tool electrode 20 to the workpiece 1.

In a case where unipolar pulse current is used, such as practical example 1, in order to obtain a mirror surface with low speed scanning it is necessary to lengthen idle time (refer to Fig. 5). However, if duty factor is lowered removal amount per unit time is low compared to the case of using direct current, which tends to increase machining time.

With practical example 2, by using alternating current, as described previously, polarity of current flowing between the electrodes is reversed and a time t₃ where the workpiece becomes a cathode exists. During this t₃, it is possible to forcibly discharge electrical charge that has been charged into an electrical double layer (refer to capacitor C_{DL} in Fig. 3). That is, the charge control means 40 of practical example 2 is configured to eliminate electrical charge that has been charged into the electrical double layer using application of the reverse direction current component. It should be noted that in this specification "eliminate electrical charge" means so-called discharging of electrical charge, and means not only the complete elimination of electrical charge but also reduction in the amount of electrical charge that has been accumulated.

In this speculation, it can be considered that mirror finishing will become possible, without setting a long idle time, by using an alternating current waveform. With this practical example 2, therefore, pulse width t₁ to make the workpiece 1 an anode was made constant at 100µs, time t₃ to make the workpiece 1 a cathode, and scanning speed, were varied, and the effect of AC current duty factor and scanning speed on surface roughness was investigated.

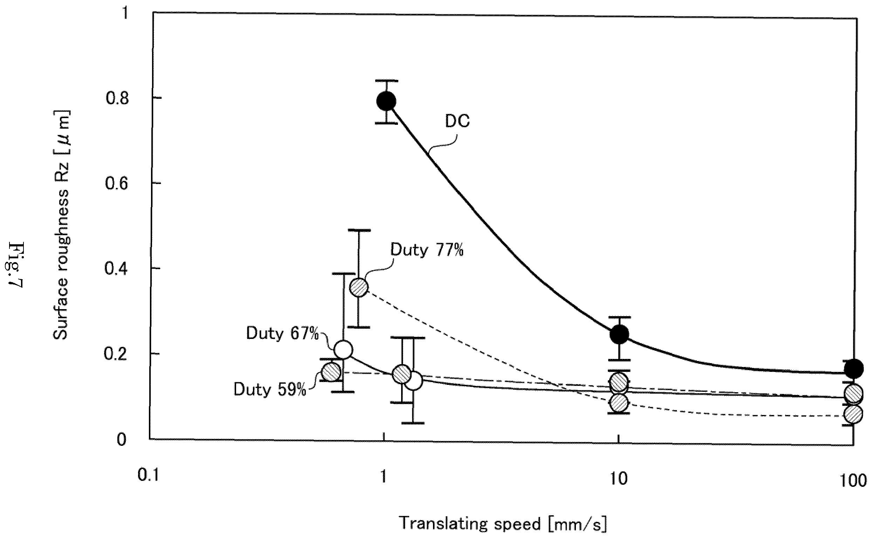

Experimental results for practical example 2 are shown in Fig. 7. As shown in Fig. 7, in a case where AC current is used also, similarly to when direct current and unipolar pulse current is used, (refer to Fig. 5), it will be understood that surface roughness is lowered together with raising of scanning speed. Also, when scanning speed is slow, with a pulse width of 100µs, it is possible to improve surface roughness with increase in polarity inversion time t₃ (that is, lowering of duty factor). On the other hand, in a case where alternating current is used in low speed scanning machining, then compared to the case of using unipolar pulse current in practical example 1, it will be understood that a machined surface having good surface roughness can be obtained while duty factor is high. Specifically, by applying a reverse direction current component using the charge control means 40, an improvement in the machining speed of mirror finishing can be expected.

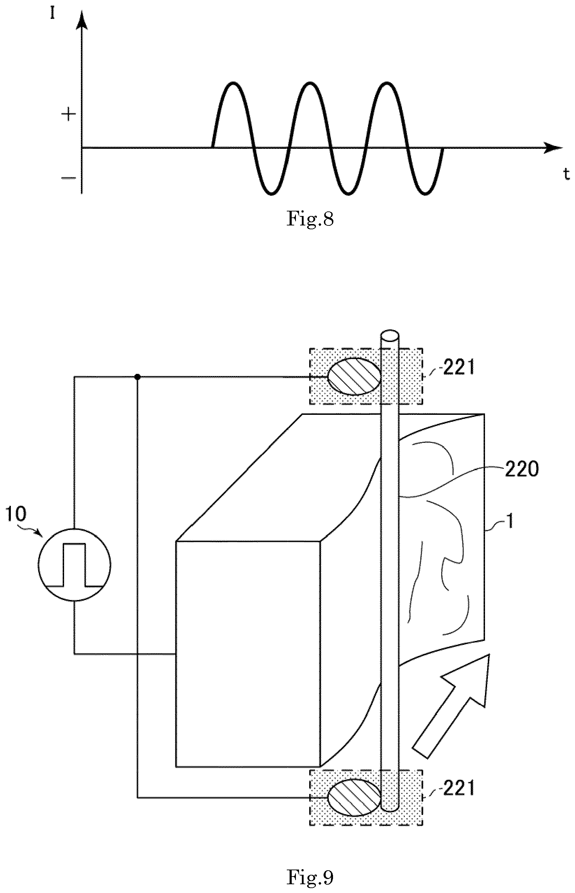

It should be noted that with practical example 2 a rectangular wave has been used for the alternating current, but it is also possible to use a different waveform, such as a triangular wave or a sine wave (Fig. 8).

Also, with this practical example, the charge control means 40 preferably controls output from the power source 10 so that a value obtained by integrating forward direction current with respect to application time of that current (t₁ in Fig. 6) (forward direction electrical charge) and a value obtained by integrating reverse direction current with respect to application time of that current (t₃ in Fig. 6) (reverse direction electrical charge) become substantially equal. By doing this, then since it is possible to almost completely discharge electrical charge that has been charged into the electrical double layer (refer to capacitor C_{DL} in Fig. 3), if the duty factor is the same it is possible to obtain better surface roughness.

Further, with this practical example the charge control means 40 preferably sets a peak value for the reverse direction current component lower than a peak value for the forward direction current component. This is because, generally, if current density is low a proportion of current that is used in removing material on the anode is reduced, and to the extent of that reduction a proportion that is used in oxygen generation and oxidation reactions is increased. In this way it is possible to reduce amount of electrolysis of the tool electrode 20 when reverse direction current flows, and to reduce running cost of the device.

In a case where peak value of the reverse direction current component is set lower than the peak value of the forward direction current component, it is preferable to set the reverse direction current pulse width longer than the forward direction current pulse width in order to sufficiently discharge electrical charge that has been charged in to the electrical double layer. In this way it is possible to increase machining speed to the maximum limit in a range that does not cause unnecessary electrolysis at the tool electrode 20. Obviously, as has been described above, discharging electrical charge of the electrical double layer is an objective purpose, and accumulating electrical charge of a reverse polarity in the electrical double layer is not the purpose in the embodiment. It is therefore preferable to set the pulse width to an upper limit value without reverse direction electrical charge exceeding forward direction electrical charge.

With this practical example, the charge control means 40 may insert a current idle period between the forward direction current component and the reverse direction current component of the alternating current. The current idle period is capable of being inserted during period t₁ in Fig. 6 or in period t₃, and is a period in which voltage or current becomes 0.

While the reverse direction pulse width (period t₃) is preferably set to level such that reverse direction electrical charge does not exceed the forward direction electrical charge, these phenomena have variations depending on the state of the electrode gap. For example, the potential distribution in Fig. 3 is as ideal as possible, and in actual fact erosion products exist, and considerable unevenness exists on the surface profile. There is therefore a possibility of the reverse direction electrical charge exceeding the forward direction electrical charge locally. It is therefore possible, for example, to use this current idle period as an adjustment element.

Specifically, reverse direction current is applied after forward direction current application, and after the current idle period has been provided, forward direction current is applied as the next cycle. Reverse direction pulse width (period t₃) at this time is set so that reverse direction electrical charge becomes about, for example, 2/3 of the forward direction electrical charge, and after that the current idle period is provided. In this way, even if local dispersion is considered, the reverse direction electrical charge does not exceed the forward direction electrical charge, and it is possible to avoid reverse charging into the electrical double layer. Also, compared to practical example 1 where only a simple current idle period was inserted, in a case where means for applying reverse direction current is adopted, since it is possible to eliminate electrical charge of the electrical double layer at high-speed, it is possible to carry out electrochemical machining at high speed while acquiring a mirror surface.

While it is desirable to have a low current peak value since reverse direction current depletes an electrode, it is possible to alleviate or eliminate a problem such as electrode electrolysis as long as reverse direction pulse width is sufficiently short even with reverse direction current peak value being set high. Since it is possible to eliminate electrical charge that has been accumulated in the electrical double layer at an early stage by setting peak value of the reverse direction current component higher than peak value of the forward direction current component, it is possible for the reverse direction pulse width (period t₃) to be set short. Specifically, since it is possible to increase duty factor while preventing electrode consumption, it is possible to improve machining speed. It is obviously also possible to set current idle period after applying a reverse direction current pulses, as described above.

In the first embodiment described above, the opposing area of the workpiece 1 and the tool electrode 20 is preferable to fully cover a surface area to be machined of the workpiece 1 over a fine section span by scanning, and it is also preferable to make a distance between the tool electrode and the workpiece, within the range of the opposing area, small enough that there is no significant lack of uniformity due to the curvature of the workpiece.

Also, the charge control means 40 of the first embodiment can be configured to change control content in order to eliminate electrical charge, in accordance with scanning of the tool electrode 20. For example, by changing control content in order to eliminate electrical charge in accordance with machining conditions such as distance between electrodes, opposed area of the tool electrode and the workpiece, electrolytic solution supply amount etc. it is possible to carry out more appropriate mirror finishing. Also, by using conditions that are contrary to appropriate conditions for mirror finishing, it is possible to form a partially non-mirrored surface.

With this embodiment, the tool electrode 20 is scanned. In a case where reciprocating motion is repeated and machining direction is changed, relative speed between the tool electrode 20 and the workpiece 1 is lowered at locations where scanning is turned around and locations where machining direction has been changed. Specifically, since scanning speed on the horizontal axis of Fig. 5 and Fig. 7 is changed, in this vicinity it tends to result in nonuniform machining having a rough surface. With the intention of preventing this, it is possible to change duty factor, reverse polarity pulse width and reverse polarity current value in accordance with scanning speed. For example, it is possible to obtain a uniform surface roughness by operating the charge control means 40, at a returning point of the reciprocating motion, so as to make the idle time long compared to in regions before and after that, or alternatively such that reverse currents pulse width is widened.

### (Second Embodiment)

Next, an electrochemical machining device of a second embodiment of the present invention will be described with reference to Fig. 9. In the description of the second embodiment, for elements that are basically common to the previously described first embodiment complicated description will be avoided by using the same reference numerals.

In the previously described first embodiment so-called electrolyte jet machining was used. Conversely, with the second embodiment a jet is not used and normal electrochemical machining is assumed.

With the machining device of the second embodiment, a rod shaped tool electrode 220 is used instead of the nozzle shaped tool electrode 20 (refer to Fig. 9). One pole of the power source 10 is electrically connected to both ends of the tool electrode 220 by means of two specified fixtures 221. The other pole of the power source 10 is electrically connected to the workpiece 1, similarly to the previously described first embodiment.

The tool electrode 220 of this embodiment is arranged so as to be substantially parallel to the surface of the workpiece 1, and is capable of scanning along the surface of the workpiece 1. The electrolytic solution (not illustrated) in the second embodiment is previously filled between the tool electrode 220 and the surface of the workpiece 1 using a suitable electrolytic bath (not illustrated).

Specifically, the workpiece 1 is machined in a state of being immersed in electrolytic solution. Obviously, since it is assumed that erosion products will arise between the workpiece 1 and the tool electrode 220, electrolytic solution may also be supplied to the electrode gap using suitable blowing means. Being parallel to the workpiece 1 and the tool electrode 220 is preferable, and if the distance between electrodes varies in the vertical direction it becomes difficult to implement uniform electrochemical machining. For this reason the tool electrode 220 is held and electrically connected at upper and lower parts by fixtures 221, so that it is difficult for vibration and deformation of the tool electrode 220 to happen. However, this is not at all limiting, and the tool electrode 220 may be held by only one of the upper and lower fixtures 221.

Furthermore it is also possible to use a wire electrode that is used in a so-called wire electric discharge machine as the tool electrode 220. Furthermore, in order to achieve compatibility with a wire electric discharge machine, it is possible for a wire electrode to be used in the both machining actions. For example, after performing wire electric discharge machining on the workpiece 1 and then finishing the surface, it is possible to perform further finishing on the finished machined surface after electric discharge machining, with electrochemical machining using the same wire electrode. By having a structure with which it is possible to switch between wire electric discharge machining and electrochemical machining within the same device, there is the advantage that work involved in positioning the tool electrode 220 and the workpiece 1 parallel to each other becomes easy.

With the second embodiment also, similarly to the previously described first embodiment, there is the advantage that it is possible to carry out mirror finishing of the workpiece while suppressing scanning speed, by eliminating electrical charge of the electrical double layer using the charge control means 40. Also, by using alternating current it is possible to expect improvements in machining speed of the electrochemical machining.

The remaining structure and advantages of second embodiment are the same as those of the previously described first embodiment, and so further description will be omitted.

### (Third Embodiment)

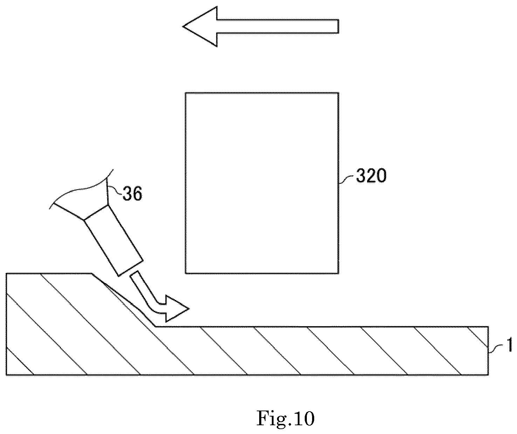

Next, an electrochemical machining device of a second embodiment of the present invention will be described with reference to Fig. 10. In the description of the third embodiment, for elements that are basically common to the previously described first embodiment complicated description will be avoided by using the same reference numerals.

With the third embodiment, similarly to the previously described second embodiment, a jet is not used and normal electrochemical machining is assumed.

With the machining device of the third embodiment, a block shaped tool electrode 320 is used instead of the nozzle shaped tool electrode 20 (refer to Fig. 10). One pole of the power source 10 (omitted from Fig. 10) is electrically connected to the tool electrode 320. The other pole of the power source 10 is electrically connected to the workpiece 1, similarly to the previously described first embodiment.

The tool electrode 320 of this embodiment can be scanned along the surface of the workpiece 1 with the surface of the tool electrode 320 facing the workpiece 1. The electrolytic solution of the third embodiment is supplied between the tool electrode 320 and the workpiece 1 by a nozzle 36.

With the third embodiment also, similarly to the previously described first embodiment, there is the advantage that it is possible to carry out mirror finishing of the workpiece while suppressing scanning speed, by eliminating electrical charge of the electrical double layer using the charge control means 40. Also, by using alternating current it is possible to expect improvements in machining speed of the electrochemical machining.

The remaining structure and advantages of third embodiment are the same as those of the previously described first embodiment, and so further description will be omitted.

It should be noted that the present invention is not limited to the previously described embodiments, and various modifications can be additionally obtained within a scope that does not depart from the gist of the present invention.

### (Additions)

The invention described in each of the previously described embodiments can be considered to be described in the following aspects.

### (Aspect A)

An electrochemical machining device, comprising:
a tool electrode arranged apart from the workpiece,
an electrolytic solution that is filled between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
peak value of the reverse direction current pulses is made lower than peak value of the forward direction current pulses, and pulse width of the reverse direction current pulses is set wider than pulse width of the forward direction current pulses.

### (Aspect B)

An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
peak value of the reverse direction current pulses is made higher than peak value of the forward direction current pulses, and
pulse width of the reverse direction current pulses is set narrower than pulse width of the forward direction current pulses.

### (Aspect C)

An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
pulse width of the reverse direction current pulses is set to less than or equal to pulse width of the forward direction current pulses, and
when switching from the reverse direction current pulses to the forward direction current pulses an idle period is provided.

### (Aspect D)

An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
with respect to forward direction electrical charge that is supplied between the workpiece and the tool electrode by the forward direction current pulses, reverse direction electrical charge that is supplied between the workpiece and the tool electrode by the reverse direction current pulses is set so as to become small, and
when switching from the reverse direction current pulses to the forward direction current pulses an idle period is provided.

### (Aspect E)

An electrochemical machining device, comprising;
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
a ratio (A/B) of forward direction electrical charge (A) that is supplied between the workpiece and the tool electrode by the forward direction current pulses, and reverse direction electrical charge (B) that is supplied between the workpiece and the tool electrode by the reverse direction current pulses, is set so as to become bigger as speed of the scanning becomes faster.

### (Aspect F)

An electrochemical machining device, comprising:
a tool electrode arranged apart from the workpiece,
an electrolytic solution that fills the gap between the workpiece and the tool electrode, and
a power source for supplying forward direction current pulses between the workpiece and the tool electrode, wherein
in the electrochemical machining device that carries out electrochemical machining by relatively scanning the tool electrode and the workpiece, a duty factor for applying the forward direction current pulses is set so as to become larger as speed of the scanning becomes faster.

### (Aspect G)

An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece, pulse width of the reverse direction current pulses is set so as to become smaller, with respect to pulse width of the forward direction current pulses, as speed of the scanning becomes faster.

### Description Of The Numerals

1 workpiece
3 electrolytic solution
10 power source
20, 220, 320 tool electrode
21 base section
22 tip portion
221 fixture
30 electrolytic solution supply section
31 tank
32 piping
33 pump
34 sink
341 drain section
36 nozzle
40 charge control means
50 workpiece support section
60 scanning drive section
61 XZ direction drive section
62 Y direction drive section
t₁ pulse width
t₂ pulse idle time
t₃ polarity inversion time
T pulse cycle
R resistive component inside electrolytic solution jet
C_{DL} capacitive component corresponding to electrical double layer

## Claims

1. An electrochemical machining device for machining a surface of a workpiece using electrochemical machining, comprising
a power supply, a tool electrode, an electrolytic solution supply section, and charge control means, wherein
the power source applies a voltage, for making current for electrochemical machining flow, between the tool electrode and the workpiece,
the tool electrode is arranged apart from the workpiece, and is capable of being scanned relatively along a surface direction of the workpiece,
the electrolytic solution supply section can supply electrolytic solution for electrochemical machining between the tool electrode and the workpiece, and
the charge control means eliminates electrical charge that has accumulated between the tool electrode and the workpiece as a result of voltage application from the power source.

2. The electrochemical machining device of claim 1, wherein the power source uses pulse current as the current, and
the charge control means eliminates the electrical charge based on duty factor of the pulse current.

3. The electrochemical machining device of claim 2, wherein an upper limit of absolute value of pulse width for the pulse current is set short enough to apply mirror finishing to a surface of the workpiece, and current density of the current for electrochemical machining is set high enough for application of the mirror finishing.

4. The electrochemical machining device of claim 1, wherein
the power source uses alternating current as the current,
the alternating current has a forward direction current component that makes the workpiece an anode and a reverse direction current component that makes the workpiece a cathode, and
the charge control means eliminates the electrical charge by applying the reverse direction current component.

5. The electrochemical machining device of claim 4, wherein the charge control means controls the power source so that a value obtained by integrating forward direction current density of the forward direction current component over application time, and a value obtained by integrating reverse current density of the reverse direction current component over application time, become substantially equal.

6. The electrochemical machining device of claim 5, wherein the charge control means sets a peak value for the reverse direction current component lower than a peak value for the forward direction current component.

7. The electrochemical machining device of any one of claims 4-6, wherein the charge control means eliminates the electrical charge by inserting a current idle period between the forward direction current component and the reverse direction current component of the alternating current.

8. The electrochemical machining device of any one of claims 4-7, wherein the tool electrode is made from monocrystalline silicon, titanium alloy, niobium alloy, graphite, or platinum.

9. The electrochemical machining device of any one of claims 1-8, wherein the power source is a constant voltage source or a constant current source.

10. The electrochemical machining device of any one of claims 1-9, wherein at least part of a surface of the workpiece has a curvature that is not 0, and an opposing area of the workpiece and the tool electrode is made sufficiently small that distribution of distance between the tool electrode and the workpiece within a range of this opposing area is regarded as substantially constant regardless of the curvature.

11. The electrochemical machining device of any one of claims 1-10, wherein the charge control means changes content of control for eliminating the electrical charge in accordance with relative scanning of the tool electrode.

12. An electrochemical machining method that uses the electrochemical machining device of any one of claims 1-11 comprising
a step of making a current for electrochemical machining flow between the tool electrode and the workpiece using the power source,
a step of scanning the tool electrode relatively along the surface direction of the workpiece,
a step of supplying electrolytic solution between the tool electrode and the workpiece using the electrolytic solution supply section, and
a step of eliminating electrical charge that has accumulated between the tool electrode and the workpiece using the charge control means.

13. A surface roughness adjustment method that uses the electrochemical machining device of any one of claims 1-11, comprising
a step of making a current for electrochemical machining flow between the tool electrode and the workpiece using the power source,
a step of scanning the tool electrode relatively along the surface direction of the workpiece,
a step of supplying electrolytic solution between the tool electrode and the workpiece using the electrolytic solution supply section, and
a step of adjusting surface roughness of the workpiece surface by controlling electrical charge that has accumulated between the tool electrode and the workpiece using the charge control means.

14. An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
peak value of the reverse direction current pulses is made lower than peak value of the forward direction current pulses, and pulse width of the reverse direction current pulses is set wider than pulse width of the forward direction current pulses.

15. An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
peak value of the reverse direction current pulses is made higher than peak value of the forward direction current pulses, and
pulse width of the reverse direction current pulses is set narrower than pulse width of the forward direction current pulses.

16. An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
pulse width of the reverse direction current pulses is set less than or equal to pulse width of the forward direction current pulses, and
when switching from the reverse direction current pulses to the forward direction current pulses an idle period is provided.

17. An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
with respect to forward direction electrical charge that is supplied between the workpiece and the tool electrode by the forward direction current pulses, reverse direction electrical charge that is supplied between the workpiece and the tool electrode by the reverse direction current pulses is set so as to become smaller, and
when switching from the reverse direction current pulses to the forward direction current pulses an idle period is provided.

18. An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
a ratio (A/B) of forward direction electrical charge (A) that is supplied between the workpiece and the tool electrode by the forward direction current pulses, and reverse direction electrical charge (B) that is supplied between the workpiece and the tool electrode by the reverse direction current pulses, is set so as to become bigger as speed of the scanning becomes faster.

19. An electrochemical machining device, comprising:
a tool electrode arranged apart from the workpiece,
an electrolytic solution that fills the gap between the workpiece and the tool electrode, and
a power source for supplying forward direction current pulses between the workpiece and the tool electrode, wherein
in the electrochemical machining device that carries out electrochemical machining by relatively scanning the tool electrode and the workpiece,
a duty factor for applying the forward direction current pulses is set so as to become larger as speed of the scanning becomes faster.

20. An electrochemical machining device, comprising:
a tool electrode arranged apart from the workpiece,
an electrolytic solution that fills the gap between the workpiece and the tool electrode, and
a power source for supplying forward direction current pulses and reverse direction current pulses between the workpiece and the tool electrode, wherein
in the electrochemical machining device that carries out electrochemical machining by relatively scanning the tool electrode and the workpiece,
pulse width of reverse direction current pulses is set so as to become smaller, with respect to pulse width of forward direction current pulses, as speed of the scanning becomes faster.
